# EUROPEAN PATENT SPECIFICATION

(11) **EP 2 976 775 B1**
(45) Date of publication and mention of the grant of the patent: **02.01.2019**
(21) Application number: 14718450.1
(22) Date of filing: 21.03.2014
(51) Int. Cl.: H01G 11/26, H01G 11/52, H01M 2/14, H01M 2/16, H01M 4/04, H01M 4/139, H01M 4/66, H01G 11/86

(54) **METHODS OF MANUFACTURE OF ELECTRODES, SEPARATORS, AND ELECTROCHEMICAL ENERGY STORAGE DEVICES**
VERFAHREN ZUR HERSTELLUNG VON ELEKTRODEN, SEPARATOREN UND ELEKTROCHEMISCHEN ENERGIESPEICHERVORRICHTUNGEN
PROCÉDÉS DE FABRICATION D'ÉLECTRODES, DE SÉPARATEURS ET DE DISPOSITIFS DE STOCKAGE D'ÉNERGIE ÉLECTROCHIMIQUE

(30) Priority: 21.03.2013 GB 201305231
(43) Date of publication of application: 27.01.2016
(73) Proprietor: Oxford University Innovation Limited, Botley Oxford OX2 0JB (GB)
(72) Inventor: GRANT, Patrick, Oxford Oxfordshire OX1 3PH (GB)
(74) Representative: Barker Brettell LLP
(86) International application number: PCT/GB2014/050897
(87) International publication number: WO 2014/147419

(56) References cited:
- US-A1- 2001 012 580
- US-A1- 2004 126 655
- US-A1- 2008 206 616
- US-A1- 2011 045 253
- US-A1- 2011 123 866
- US-B1- 6 251 473
- MENDOZA-SÁNCHEZ BEATRIZ ET AL: "Charge storage properties of a [alpha]-MoO3/carboxyl-functionalized single-walled carbon nanotube composite electrode in a Li ion electro", ELECTROCHIMICA ACTA, ELSEVIER SCIENCE PUBLISHERS, BARKING, GB, vol. 98, 20 March 2013 (2013-03-20), pages 294-302, XP028538582, ISSN: 0013-4686, DOI: 10.1016/J.ELECTACTA.2013.03.072

## Description

The present invention relates to the manufacture of electrodes and/or separators for electrochemical energy storage devices such as batteries, e.g. lithium ion batteries, and supercapacitors and the manufacture of fuel cell membranes.

The invention also relates to the manufacture of electrochemical energy storage devices such as batteries, in particular lithium ion batteries, supercapacitors and fuel cells.

The invention also relates to electrodes and/or separators for electrochemical energy storage devices such as batteries, e.g. lithium ion batteries, and supercapacitors and fuel cell membranes. In addition, the invention relates to electrochemical energy storage devices such as batteries, in particular lithium ion batteries, supercapacitors and fuel cells.

It is known to use slurry casting to make electrodes for batteries. Slurry casting is a well established, mature, stable and automated manufacturing methodology for large volume manufacture. Slurry casting is productive and scalable and can be used to produce both anodes and cathodes. Approximately three billion cells per year are manufactured using slurry casting.

Slurry casting typically comprises the steps of mixing various components, e.g. an electrochemically active powder, a conductivity enhancer, a binder and a fugitive carrier, in order to form a slurry. The slurry is then deposited on to a substrate. In battery manufacture, the substrate comprises a conducting current collector, typically a sheet or foil of aluminium or copper, which may be provided on and unwound from a roll. The slurry is spread on the substrate using a doctor blade so as to cover the substrate with a substantially uniformly thick layer of slurry. The slurry is then dried. After drying, pressure is applied by rolling (calendering) to compress the electrode and increase its density. A separator is then inserted between an anode and a cathode in a three-roll mill. The electrodes and separator are then packaged in a controlled environment with an electrolyte to produce a finished battery.

In the case of a lithium ion battery, the electrochemically active material contained in the cathode may typically be LiCoO₂. The electrochemically active material contained in the anode may typically be graphite. Cathodes containing LiCoO₂ typically need to be manufactured in a dry room.

Electrodes manufactured by slurry casting are monolithic. They are intended to, and usually have, the same microstructure from point to point. Generally, they also have a uniform porosity. The electrodes must have some porosity to allow, in use, an electrolyte to permeate the electrode, and in the slurry casting manufacturing route, this porosity and hence the overall density of the electrode is controlled by the use of various additional materials or additives such as a polymer, e.g. polyvinylidene difluoride (PVDF), or by controlling the particle size and particle size distribution, and post-casting application of pressure by rolling ("calendering") to compress the electrode and so increase its density. If the electrode is not dense enough, the energy storage per unit mass of electrode and per unit area of electrode will be comparatively low; if the electrode is too dense, the electrolyte will not permeate it fully and the movement of ions in the electrolyte may be restricted so that parts of the electrode are poorly utilised for ion (energy) storage.

The current slurry casting manufacturing route has been optimised for industrial application but offers very restricted scope to tailor or design the through thickness micro or meso structure of the electrode: it is essentially the same at all places.

US2011/123866A1 discloses methods and apparatuses that yield electrodes having at least one functional gradient therein. In many embodiments, the electrodes comprise an electrode matrix having a plurality of layers, where at least two of the layers differ functionally, in composition, structure, or, organisation.

US2011/045253A1 discloses techniques for printing a layer of an electrode on a substrate with control of at least one property of the layer at each of a plurality of locations in the layer.

Mendoza-Sanchez Beatriz et al: "Charge storage properties of a α-MoO3/carboxyl-functionalized single-walled carbon nanotube composite electrode in a Li ion electrolyte", Electrochemical Acta, vol. 98, 20 March 2013, pages 294-302 discloses a method for the fabrication of thin film α-MoO3/SWCNT-COOH composite electrodes with a high charge storage capacity in LiClO4/propylene carbonate in a 1.3-3.5 V (versus Li/Li+) working electrochemical window.

US2008/206616A1 discloses inks and processes for forming catalyst coated membranes for use in fuel cells, and more preferably for use in methanol fuel cells.

US2004/126655A1 discloses a laminate type battery comprising a substrate, a power generating element which has at least one single cell made by a positive electrode layer, an electrolyte layer and a negative electrode layer which are sandwiched by collecting layers from both sides thereof, and an electric circuit portion having electrode terminals which connect the collecting layers and the electrode terminals.

US2001/012580A1 discloses a battery including a polar solvent transportive, ionically conductive separator formed directly on an electrode, which is prepared by applying a coating composition containing a polymer or gel dispersed in a polar solvent directly to the electrode surface and solidifying materials in the coating composition to form a separator membrane.

US6251473B1 discloses a method for fabrication of solid ceramic thin films in which a porous or dense supporting substrate is spray coated with an oxide powder/solid suspension to form a coated supporting substrate. The coated supporting substrate is then sintered at an elevated temperature to form a solid ceramic thin film on the supporting substrate.

A first aspect of the invention provides a method of manufacture of an electrode having a non-uniform microstructure or mesostructure comprising predetermined spatial variations in porosity in the thickness direction, the method comprising:
providing a first suspension containing a first electrode material and a second solution containing a second electrode material, wherein the first electrode material comprises an electrochemically active material and the second electrode material comprises an electrochemically inert one-dimensional material, which provides in use a physical means to increase local porosity by propping open at least partially the local microstructure or mesostructure of the electrode as a scaffold;
delivering the first and second suspension to a spraying means;
operating the spraying means for a period of time to spray the first and second suspension on to a substrate located a distance from the spraying means; and
controlling the mass flow rate of the first electrode material and/or the second electrode material to and/or through the spraying means as a function of time for at least a portion of the period of time,
wherein the one-dimensional material comprises nanowires or microwires of a transition metal oxide.

By controlling the mass flow rate of one or more of the electrode materials to and/or through the spraying means as a function of time, an electrode having a non-uniform microstructure or mesostructure can be produced.

The mass flow rate of each of the first electrode material and the second electrode material to and/or through the spraying means may be controlled as a function of time separately or simultaneously.

The electrode may be a structured, graded or reticulated electrode.

The electrode may have a non-uniform through thickness microstructure or mesostructure. The electrode may have a non-uniform microstructure or mesostructure in only one dimension.

The non-uniform microstructure or mesostructure may be predetermined by reference to a theoretical model and/or empirical data of electrode performance.

The method may comprise a preliminary step of designing the electrode having the non-uniform microstructure or mesostructure.

The mass flow rate of one or more of the electrode materials may be controlled as a function of time in accordance with a predetermined program.

The method may be continuous and/or automated.

The method may comprise drying the suspensions during and/or after spraying, e.g. through spray drying effects and/or on the substrate. In an embodiment, the drying conditions may be selected and/or controlled such that the drying rate substantially matches the rate of deposition of the electrode materials. The substrate may be heated, e.g. by a heatable stage below the substrate, in order to control the drying rate. Additionally or alternatively, the substrate may be located in a heatable chamber.

In an embodiment, the method may comprise moving the substrate relative to the spraying means. Relative movement may be provided in one or more dimensions, e.g. in the x- and/or y- and/or z- dimensions. In some embodiments, the method may comprise moving the substrate relative to the spraying means in the x- and y-dimensions. The substrate may be rotated relative to the spraying means.

The distance between the spraying means and the substrate may be variable and/or controllable.

The method may comprise providing more than two suspensions containing an electrode material.

The method may comprise the step of mixing two or more of the suspensions together before delivering the suspensions to the spraying means.

The spraying means may comprise one or more spray heads or nozzles or atomisers. In an embodiment, each suspension may be delivered to a separate spraying means, e.g. spray head, nozzle or atomiser.

The electrochemically active material may comprise carbon, e.g. graphite, or LiCoO₂. In an embodiment, the predetermined spatial variations in porosity may be obtained by: varying the local proportion and/or aspect ratio of an electrochemically inert higher aspect ratio material which provides in use a physical means to increase local porosity by propping open at least partially the local microstructure or mesostructure.

The suspensions may be delivered to the spraying means using a pump. The pump may be a syringe pump or a peristaltic pump or any other pumping device.

In an embodiment, the substrate may comprise a metallic sheet or foil, e.g. an aluminium or copper sheet or foil.

In an embodiment, the method may further comprise preparing one or more of the suspensions. Preparing one or more of the suspensions may comprise: providing the electrode material in a powder form and adding the powder to a liquid carrier. Optionally, the powder may be milled, e.g. using a ball mill, before it is added to the liquid carrier. In an embodiment, the solution may be agitated to ensure that the powder suspends in the liquid carrier and/or does not settle or sediment from the suspension before it is sprayed. Each suspension may be agitated, e.g. may continue to be agitated, as it is delivered to the spraying means.

In an embodiment, the electrode may have a thickness of no more than 100 µm, no more than 50 µm, no more than 30 µm, no more than 10 µm or no more than 1 µm.

In an embodiment, the electrode may have a thickness of at least 200 nm, at least 400 nm or at least 600 nm.

Accordingly, it will be appreciated that the electrode may be thinner than the typical thickness of an electrode made by slurry casting. Typically, an electrode made by slurry casting has a thickness of from 30 µm to 150 µm. Generally, a doctor blade or similar device cannot easily spread a slurry into a layer of less than around 30 µm or 40 µm thick.

The provision of thinner electrodes may lead to improved performance of electrochemical energy storage devices comprising such electrodes. New design possibilities, e.g. thinner batteries, may also be enabled. For instance, a thinner electrode may be flexible, bendable, foldable or curvable.

In an embodiment, the method may comprise the step of pressure forming or calendering the electrode.

A second aspect of the invention provides a method of manufacture of an electrode having a thickness of no more than 100 µm comprising:
providing at least one suspension containing an electrode material;
delivering the suspension(s) to a spraying means; and
operating the spraying means to spray the suspension(s) on to a substrate located a distance from the spraying means.

In an embodiment, the electrode may have a thickness of no more than 50 µm, no more than 30 µm, no more than 10 µm or no more than 1 µm.

In an embodiment, the electrode may have a thickness of at least 200 nm, at least 400 nm or at least 600 nm.

A third aspect of the invention provides a method of manufacture of a separator comprising:
providing at least one suspension containing a separator material; and
delivering the suspension to a spraying means; and
operating the spraying means to spray the suspension on to a substrate located a distance from the spraying means.

The substrate may be an electrode, e.g. an anode or a cathode. The electrode may have been manufactured in accordance with a method according to the first aspect of the invention or the second aspect of the invention.

The separator material may comprise a polymeric material or a cellulosic material.

For instance, a suspension of micro-cellulosic fibres may be provided, in order to manufacture a paper-like separator.

The separator may have a thickness of no more than 200 µm, no more than 100 µm, no more than 50 µm, no more than 30 µm, no more than 10 µm or no more than 1 µm.

The separator may have a thickness of at least 200 nm, at least 400 nm or at least 600 nm.

In an embodiment, the separator may have a non-uniform microstructure or mesostructure.

A fourth aspect of the invention comprises a method of manufacture of an electrochemical energy storage device, e.g. a battery or a supercapacitor, comprising:
(i) manufacturing a first electrode in accordance with the first aspect of the invention or the second aspect of the invention;
(ii) using the first electrode as a substrate, manufacturing a separator in accordance with the method of the third aspect of the invention on the first electrode; and
(iii) using the separator as a substrate, manufacturing a second electrode in accordance with the first aspect of the invention or the second aspect of the invention.

The first electrode may be a cathode and the second electrode may be an anode or vice versa.

In an embodiment, the battery may comprise a lithium ion battery.

The separator may comprise a solid electrolyte. Accordingly, the battery may comprise a solid state battery, e.g. a solid state lithium ion battery.

A fifth non-claimed aspect of the invention provides an electrode comprising at least one electrochemically inert or electrochemically active material, which holds open at least a portion of the electrode as a scaffold.

In an embodiment, the material(s), which holds open at least a portion of the electrode as a scaffold, e.g. in order to contrive local variations in porosity, may comprise a high aspect ratio material such as nano- or micro- wires or nano- or micro- tubes.

A sixth non-claimed aspect of the invention provides an apparatus for manufacturing an electrode or a separator comprising:
a spraying means; and
a means for supplying at least one suspension containing electrode or separator materials to the spraying means.

In order that the invention may be well understood, it will now be described by way of example only with reference to the accompanying drawings, in which:
Figure 1 shows schematically a cell of a lithium ion battery;
Figure 2 shows an apparatus for carrying out a method according to an embodiment of the invention;
Figure 3 shows an apparatus for carrying out a method according to another embodiment of the invention;
Figure 4 is an SEM image of a first as-received graphite powder for use in the manufacture of an electrode according to the invention;
Figure 5 is an SEM image of a second as-received graphite powder for use in the manufacture of an electrode according to the invention;
Figure 6 is an SEM image of a third as-received graphite powder for use in the manufacture of an electrode according to the invention;
Figure 7 is an SEM image of a fourth as-received graphite powder for use in the manufacture of an electrode according to the invention;
Figure 8 is an SEM image of a fifth as-received graphite powder for use in the manufacture of an electrode according to the invention;
Figure 9 is a cross-section of a first sprayed graphite electrode on a copper foil current collector;
Figure 10 is a cross-section of a second sprayed graphite electrode on a copper foil current collector;
Figure 11 is a cross-section of a third sprayed graphite electrode on a copper foil current collector;
Figure 12 is a cross-section of a fourth sprayed graphite electrode on a copper foil current collector;
Figure 13 is a cross-section of a fifth sprayed graphite electrode on a copper foil current collector;
Figure 14 is a graph of potential against capacity for a first charge-discharge cycle of a fine grained sprayed electrode;
Figure 15 is a graph of capacity against cycle number for the fine grained sprayed electrode;
Figure 16 is a graph of potential against capacity for a first charge-discharge cycle of a graded sprayed electrode;
Figure 17 is a graph of capacity against cycle number for the graded sprayed electrode;
Figure 18 is a graph of potential against capacity for a first charge-discharge cycle of a coarse grained sprayed electrode; and
Figure 19 is a graph of capacity against cycle number for the coarse grained sprayed electrode.

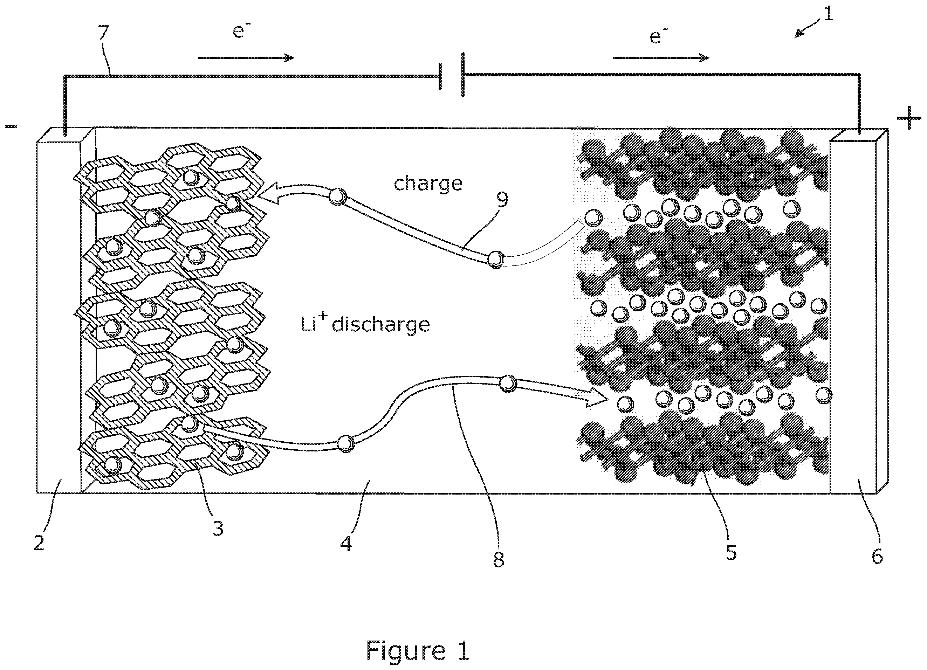

Figure 1 shows schematically a cell 1 of a lithium ion battery. The cell 1 comprises a first conducting current collector 2, which carries an anode 3 made from LiₓC₆ or graphite. A second conducting current collector 6, which carries a LiCoO₂ cathode 5 is arranged opposite the graphite anode 3. An electrolyte 4 containing lithium ions is present between the anode 3 and the cathode 5. An external circuit 7 joins the first current collector 2 to the second current collector 6. In use, electrons flow around the circuit in the direction indicated by the arrows, from the first current collector 2 to the second current collector 6. When the lithium ion battery is discharging, lithium ions move through the electrolyte 4 in the direction indicated by arrow 8, from the anode 3 to the cathode 5. When the lithium ion battery is charging, lithium ions move through the electrolyte 4 in the direction indicated by arrow 9, from the cathode 5 to the anode 3.

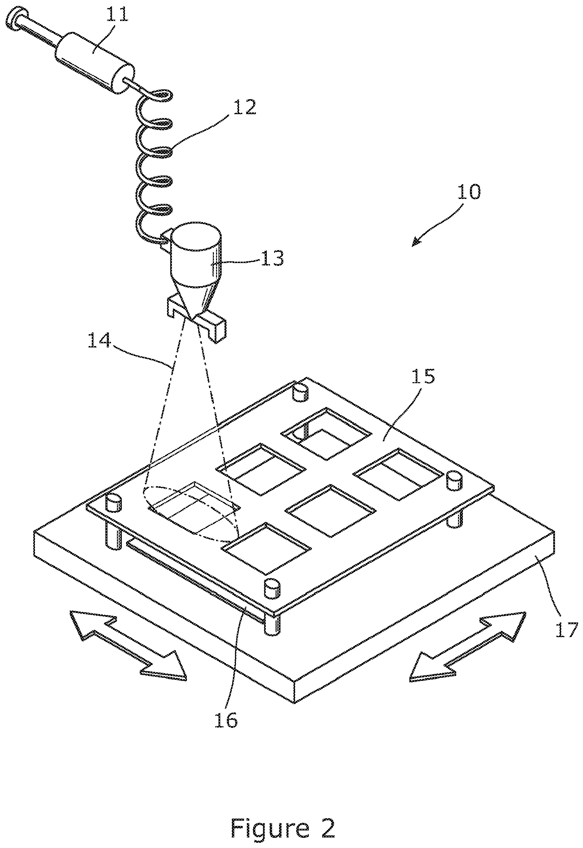

Figure 2 shows an apparatus 10 for spray forming of electrodes for electrochemical energy storage devices. The system 10 comprises a syringe pump 11, which is connected to a spray head 13 by a tube 12. A distance below the spray head 13, there is a heated stage 17, which is also movable in the x- and y- directions. On the stage 17, there is a substrate 16, which comprises an aluminium or copper foil. A mask 15 is located between the spray head 13 and the substrate 16.

In use, the syringe pump 11 contains a suspension containing the intended electrode material(s). The syringe pump 11 is operable to deliver the suspension to the spray head 13 via the tube 12. The spray head 13 sprays the suspension towards the substrate 16. The material being sprayed forms a spray cone 14. By moving the stage 17 in the x- and/or y- directions, coverage of larger areas of the substrate 16 can be achieved. The stage 17 is heated, which helps to dry the deposited suspension such that the electrode material(s) are left in place. The mask 15 acts to allow the suspension to be sprayed on to certain regions of the substrate 16, but not on to others.

Spray forming can be used to manufacture electrodes containing one-dimensional materials such as carbon nanotubes. For instance, a lithium ion battery may contain a spray formed cathode comprising carbon nanotubes and a spray formed anode comprising Fe₂O₃ and carbon nanotubes.

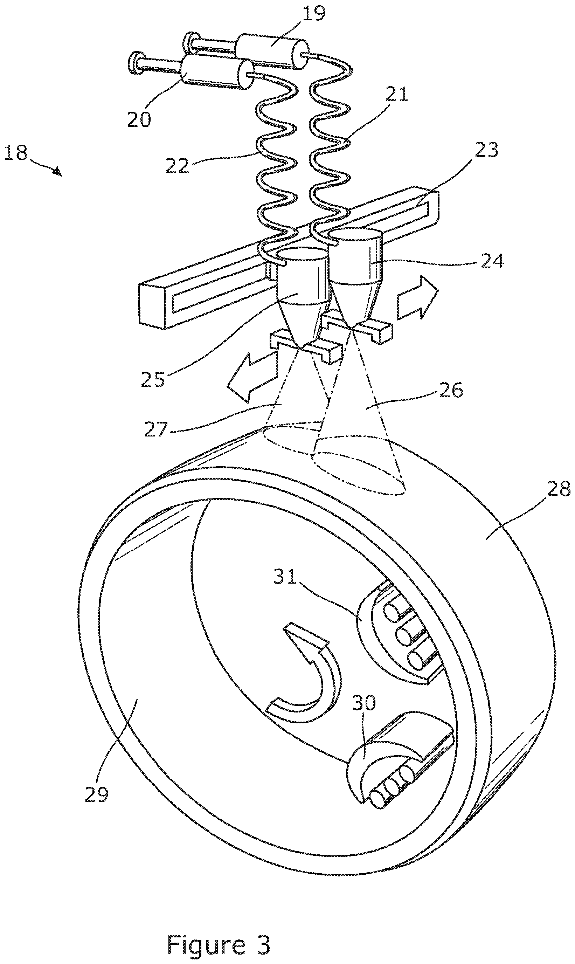

Figure 3 shows an apparatus 18 for spray forming electrodes for electrochemical energy storage devices. The apparatus 18 comprises a first spray head 24 and a second spray head 25. The first spray head 24 and the second spray head 25 are mounted on a linear drive 23, operable to move the first spray head 24 and the second spray head 25 back and forth in a horizontal direction.

A first syringe pump 19 is connected to the first spray head 24 by a first tube 21. A second syringe pump 20 is connected to the second spray head 25 by a second tube 22. Below the first spray head 24 and the second spray head 25 there is a rotatable drum 29. Infrared heaters 30, 31 located in the drum 29 are operable to heat the drum 29. In use, the drum 29 carries a length of aluminium or copper foil 28 on to which electrode material(s) is/are sprayed. The axis of rotation of the drum is substantially parallel to the horizontal direction in which the linear drive 23 can move the spray heads 24, 25.

In use, a first suspension containing an electrode material is delivered at a desired rate from the first syringe pump 19 to the first spray head 24 via the first tube 21. A second suspension containing an electrode material is delivered at a desired rate from the second syringe pump 20 via the second tube 22.

The suspensions are sprayed on to the length of aluminium or copper foil 28 by the spray heads 24, 25. The spray heads 24, 25 are moved back and forth by the linear drive 23 to ensure that the full width of the foil 28 is covered with the desired electrode materials. Rotation of the drum means that the foil 28 is moved relative to the spray heads in a direction along the length of the foil 28, thereby ensuring that the foil 28 is covered with the desired electrode materials along its length. The infrared heaters 30, 31 can be operated as required, in order to optimise the drying conditions. The suspensions are dried as they are sprayed on to the foil.

An advantage of the methods of this invention is that there may be no need for a separate, distinct drying step. By way of contrast, slurry casting involves a distinct drying step after the slurry has been spread on the substrate. Accordingly, time may be saved by using the present invention and the equipment or apparatus required may have a smaller footprint than does slurry casting equipment or apparatus.

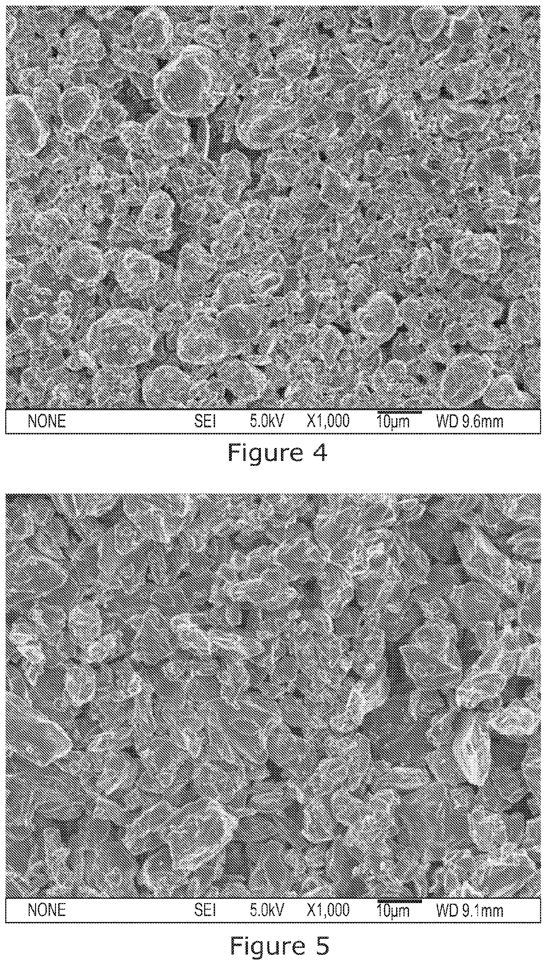

Figure 4 is a scanning electron microscope (SEM) image of a first example of an as-received graphite powder for use in manufacturing an electrode in accordance with the invention. The particle size distribution D50 of the as-received graphite powder shown in Figure 4 is 6 µm.

Figure 5 is an SEM image of a second example of an as-received graphite powder for use in manufacturing an electrode in accordance with the invention. The particle size distribution D50 of the as-received graphite powder shown in Figure 5 is 15 µm.

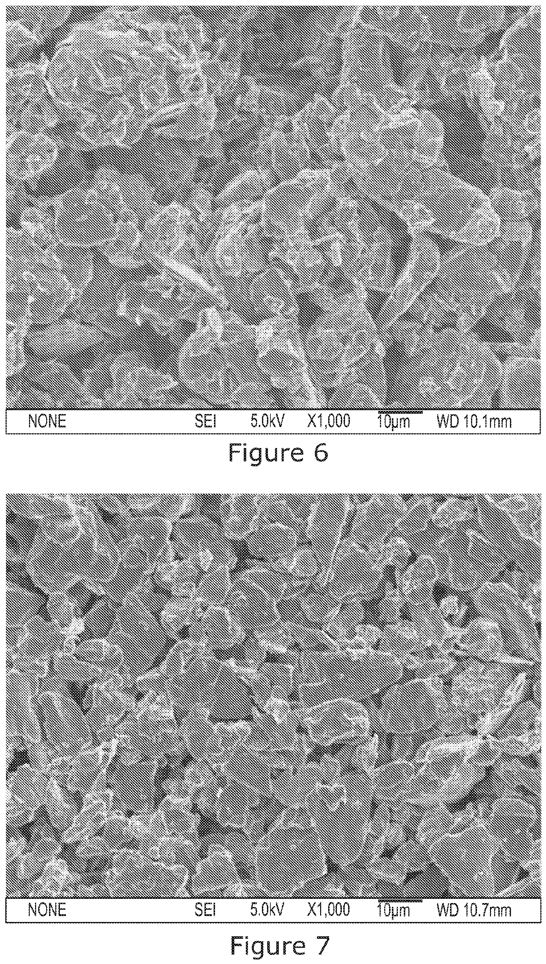

Figure 6 is an SEM image of a third example of an as-received graphite powder for use in manufacturing an electrode in accordance with the invention. The particle size distribution D50 of the as-received graphite powder shown in Figure 6 is 22 µm.

Figure 7 is an SEM image of a fourth example of an as-received graphite powder for use in manufacturing an electrode in accordance with the invention. The particle size distribution D50 of the as-received graphite powder shown in Figure 7 is 17 µm.

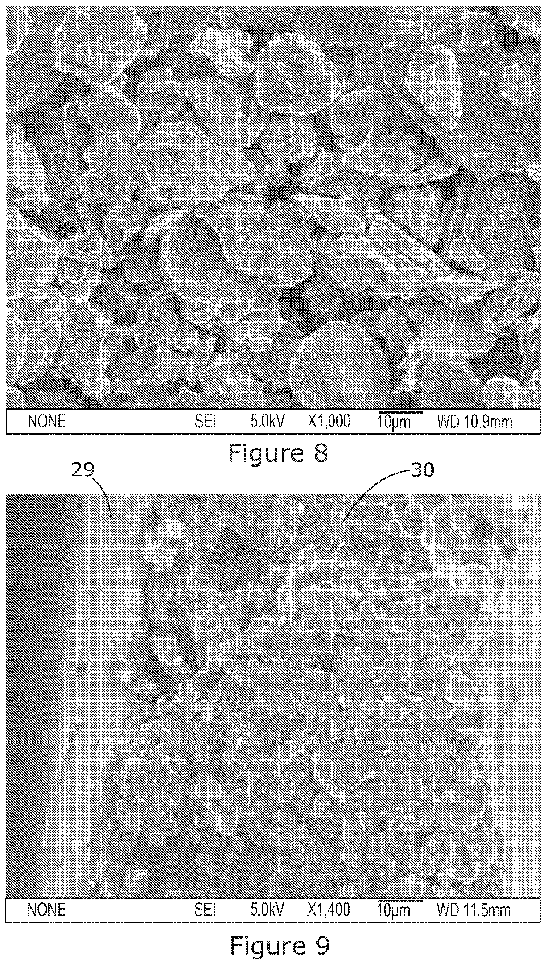

Figure 8 is an SEM image of a fifth example of an as-received graphite powder for use in manufacturing an electrode in accordance with the invention. The particle size distribution D50 of the as-received graphite powder shown in Figure 8 is from 23 to 27 µm.

Figures 9 to 13 are cross-sectional SEM images of examples of graphite electrodes manufactured by spraying graphite on to a copper foil current collector. After spraying, the electrodes were compressed by hand rolling.

Figure 9 shows a monolithic fine grained graphite electrode 30 on a copper foil current collector 29. The graphite electrode 30 was manufactured by spraying graphite on to the copper foil current collector 29. After deposition, the graphite electrode 30 was hand rolled to a thickness of approximately 70 µm.

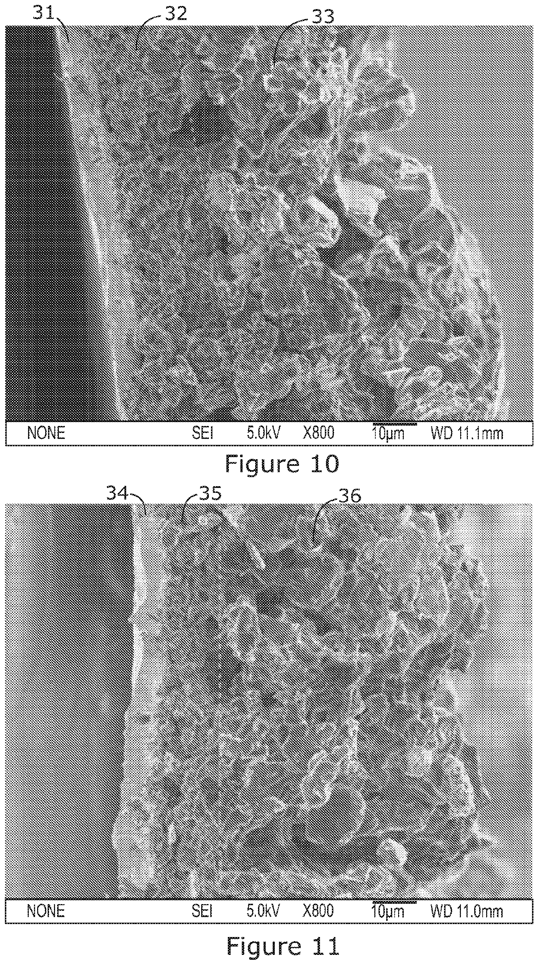

Figure 10 shows a first example of a graded graphite electrode on a copper foil current collector 31. The electrode comprises a fine layer 32 and a coarse layer 33 on top of the fine layer 32. The dashed line in Figure 10 indicates the boundary between the fine layer 32 and the coarse layer 33. This is an example of a simple step grading of an electrode. The graded electrode was formed by spraying a fine graphite powder on to the copper foil current collector 31 to a thickness of approximately 20 µm, in order to form the fine layer 32. Then, a coarse graphite powder was sprayed on to the fine layer 32, in order to form the coarse layer 33. The coarse layer has a thickness of approximately 60 µm. The graded electrode was then hand rolled. The thicknesses stated for the fine layer 32 and the coarse layer 33 are the thicknesses of the layers after hand rolling. The fine layer 32 makes up approximately 25% by volume of the graded electrode.

Figure 11 shows a second example of a graded graphite electrode. The graded graphite electrode shown in Figure 11 was manufactured in the same way as the graded graphite electrode shown in Figure 10 and discussed above. Referring to Figure 11, there is a copper foil current collector 34, a spray deposited fine layer 35 and a spray deposited coarse layer 36, the fine layer 35 being located between the copper foil current collector 34 and the coarse layer 36. The dashed line in Figure 11 indicates the boundary between the fine layer 35 and the coarse layer 36.

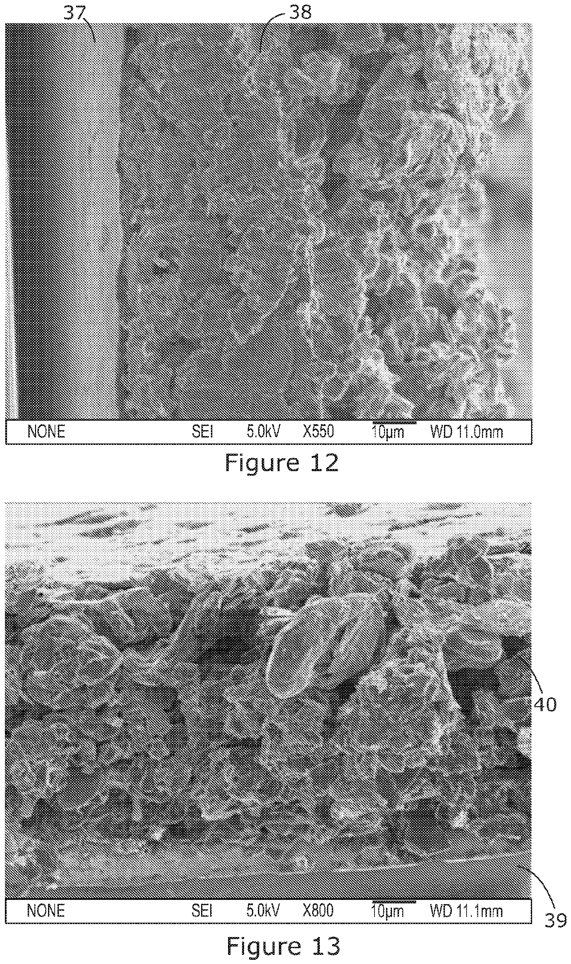

Figure 12 shows a first example of a monolithic coarse grained electrode 38 on a copper foil current collector 37. The graphite electrode 38 was manufactured by spraying graphite on to the copper foil current collector 37. After deposition, the graphite electrode 38 was hand rolled to a thickness of approximately 80 µm.

Figure 13 shows a second example of a monolithic coarse grained electrode 40 on a copper foil current collector 39. The graphite electrode 40 was manufactured by spraying graphite on to the copper foil current collector 39. After deposition, the graphite electrode 40 was hand rolled to a thickness of approximately 80 µm.

Discharge rate performance was tested for samples of fine monolithic graphite electrodes (e.g. as shown in Figure 9), step-graded graphite electrodes (e.g. as shown in Figure 10 or Figure 11) and coarse monolithic graphite electrodes (e.g. as shown in Figure 12 or Figure 13) manufactured in accordance with the invention.

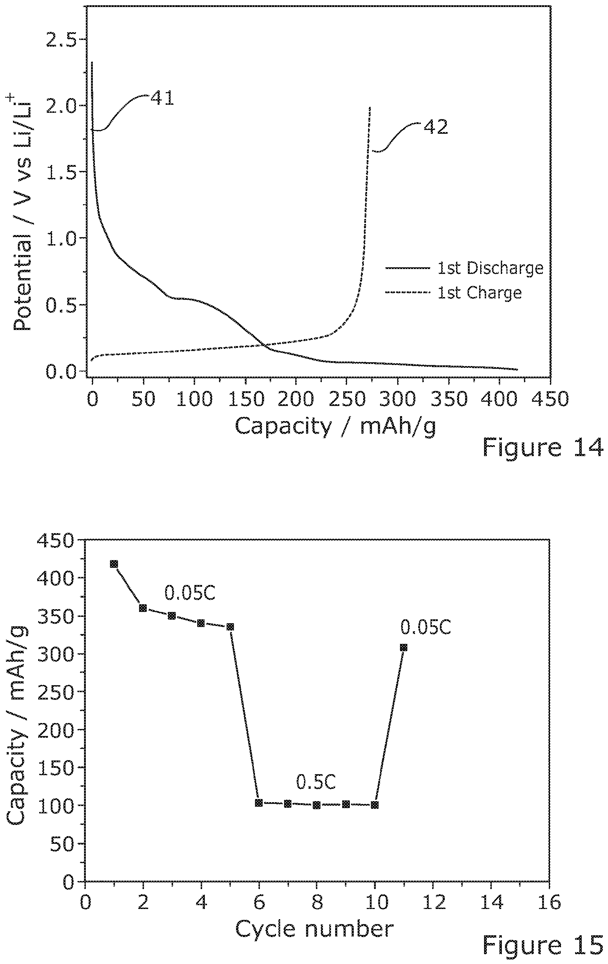

Figure 14 is a graph of potential against capacity for a first charge-discharge cycle of a fine-grained sprayed graphite electrode manufactured in accordance with the invention. Line 41 represents the first discharge. Line 42 represents the first charge.

Figure 15 is a graph of capacity against cycle number for the fine-grained sprayed graphite electrode.

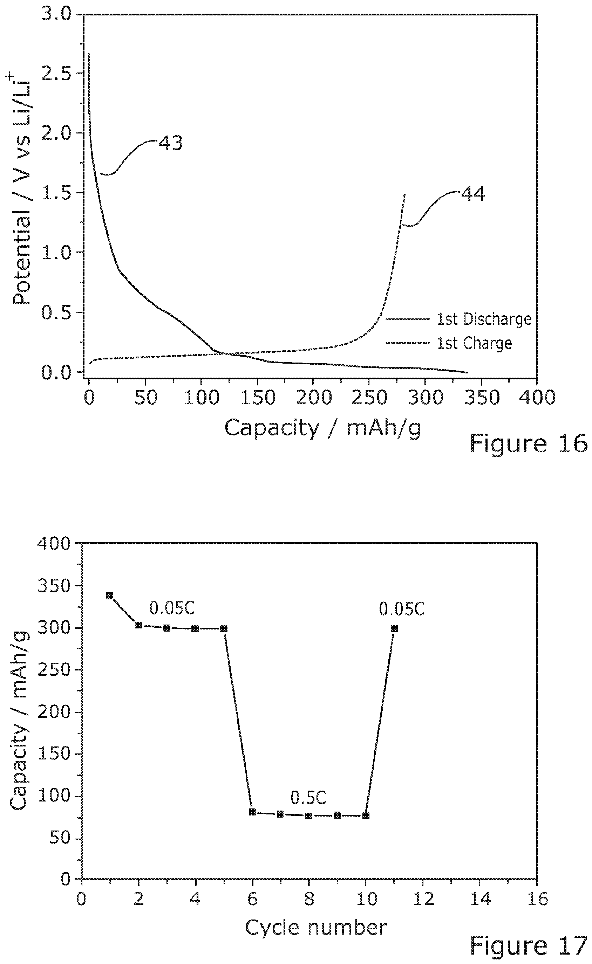

Figure 16 is a graph of potential against capacity for a first charge-discharge cycle of a step-graded sprayed graphite electrode manufactured in accordance with the invention. Line 43 represents the first discharge. Line 44 represents the first charge.

Figure 17 is a graph of capacity against cycle number for the step-graded sprayed graphite electrode.

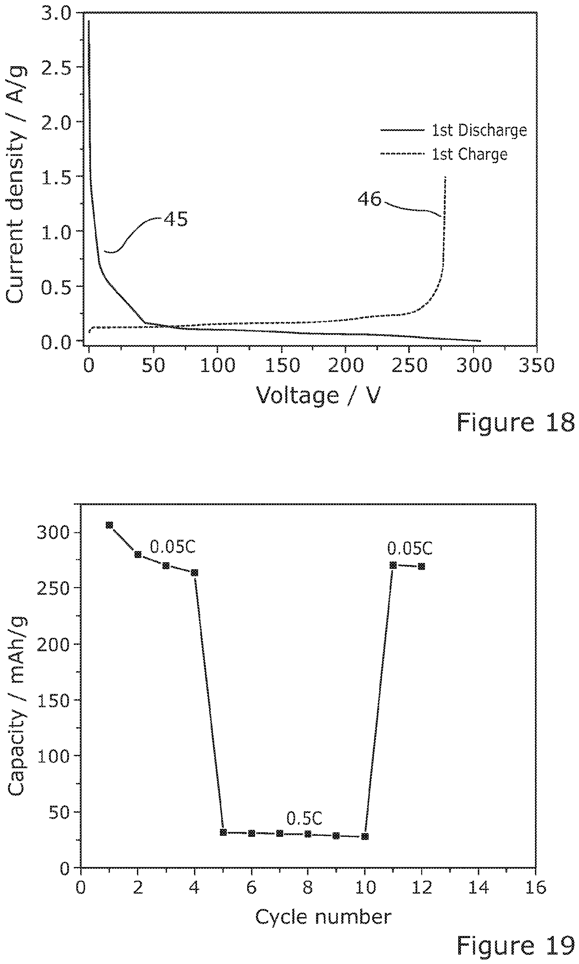

Figure 18 is a graph of potential against capacity for a first charge-discharge cycle of a coarse-grained sprayed graphite electrode manufactured in accordance with the invention. Line 45 represents the first discharge. Line 46 represents the first charge.

Figure 19 is a graph of capacity against cycle number for the a coarse-grained sprayed graphite electrode.

Referring to Figures 14 to 19, it can be seen that the first cycle efficiency of the step-graded electrode is better than the fine-grained electrode, but not as good as the coarse-grained electrode. This is because first charge losses are dominated by surface area: η_{fine} (65%) < η_{graded} (84%) < η_{coarse} (91%). In terms of discharge rate performance, it can be seen that the fine-grained electrode performs better than the step-graded electrode, which performs better than the coarse-grained electrode.

However, the discharge performance of the step-graded electrode is relatively closer to the discharge performance of the fine-grained electrode than the coarse-grained electrode, despite the relatively small proportion (approximately 25% by volume) of fine powder in the step-graded electrode. Overall, it may be concluded that simple step-grading may offer encouragement for improving discharge rate performance of electrodes.

Advantageously, the invention may provide a scalable manufacturing methodology for making electrodes for batteries, electrochemical supercapacitors and fuel cells based on spray deposition in which through thickness properties such as porosity, proportion of different materials and materials orientation can be controlled in previously unrealisable combinations.

Typically, the manufacturing method may build up an electrode, using identical (or other) electrode materials as those currently used, "layer by layer". Typically, each layer may have a thickness of from 200 nm to 500 nm. Each layer may have a thickness of around 200 nm.

Advantageously, the manufacturing method may provide an opportunity to make each layer either slightly or dramatically different from the previous one. This may be achieved by the use of two or more sprays of the electrode materials, e.g. electrochemically active materials or other materials, such as inert binders. For example, a first spray might operate with a suspension of graphite for the anode, while a second spray may carry a polymer "binder" used to hold the electrode together. At the beginning of spraying, a relatively low proportion of binder may be preferred in order to ensure a low interfacial resistance between the electrode material and the current collector; as deposition proceeds and the electrode thickens, the proportion of binder can be increased to provide increasing mechanical stability. At all stages in the process, the binder and the electrochemically active material may be mixed. For instance, the electrochemically active material and the binder may be mixed intimately at deposition by co-deposition so as to form a homogenous layer rather than discrete thin layers. Alternatively or additionally, the fraction of additives used to enhance the electrical conductivity of the electrode such as the "carbon black" or other fine scale additives could similarly be graded through the electrode thickness, e.g. according to a pre-determined design.

Advantageously, the invention may provide the ability to control through thickness porosity. Porosity is required in all electrodes (batteries, supercapacitors, fuel cells) to allow the liquid electrolyte (or gas in a Li-air or other metal-air battery) to flood the electrode and for ions, e.g. the Li+ ions in a lithium ion battery, to move easily throughout the electrode during charging and discharging - known as ion mobility. The porosity can be of the size of a few nanometers up to microns and may be known as "meso-porosity" or "macro-porosity", for the larger pores.

In a monolithic electrode, e.g. made by slurry casting, ion mobility and meso/macro porosity is expected to be more or less constant through the thickness of the electrode. However, it has been shown theoretically that, for example, a through thickness variation in porosity can lead to improved charge and discharge performance. In one study ("Multiple design optmization of lithium ion batteries using adjoint sensitivity analysis", S. Golmon, K. Maute, M.L. Dunn, Int. J. Numer. Meth. Engng, (2012)), it was reported that an increase in capacity of 70% could be achievable by optimising spatial variation in particle size distribution and porosity in a 100 µm thick cathode compared with a monolithic cathode with constant particle size and 20% porosity.

The invention may allow for at least a proportion of such theoretical gains to be achieved.

For example, close to the current collector, it may be desirable to have a relatively dense electrode, whereas further from the current collector and approaching the separator, a more open structure may be desirable. This can be achieved using the present invention in a number of ways. For example, two sprays can operate with electrochemically identical powder materials (for example, LiCoO₂), but of different powder size distribution. At the beginning of spraying, the relatively fine powder could comprise the majority of the electrode, at the end of deposition when the electrode is approaching its target thickness (e.g. from 10 to 100 µm), the electrode could comprise mainly the relatively coarse materials. Typically, this may be achieved by controlling the relative mass flow rates of the two powders in suspension through the two sprays as a function of time, according to a pre-defined design. Since porosity size and fraction is related to particle size distribution, in this way, the through thickness porosity will change. Additionally or alternatively, one (or more) sprays could operate with an electrochemically inert material, which may hold open the sprayed structure as a scaffold; their nature and their fraction could then be varied through the thickness. High aspect ratio materials such as one-dimensional "nanowires" or "microwires" of a transition metal oxide, may be effective in holding open the sprayed structure as a scaffold. An advantage of spraying over slurry casting is that spraying can be used to deposit high aspect ratio materials. In contrast, slurry casting typically cannot easily cast high aspect ratio materials, since they may make the slurry too viscous for casting and/or spreading with a doctor blade.

Separators may also be manufactured by spraying in accordance with the invention.
In a "conventional" lithium ion battery type device, the separator is typically a porous polymer or paper layer that is electrically insulating, but allows the movement of electrolyte ions (H+, Li+, K+, etc.).
For thin film lithium ion battery devices, the separator can comprise a significant fraction of overall device weight. However, if the separator is too thin, there may be an insufficient reservoir of ions.

Drawing on paper's proven utility, in some embodiments, micro-cellulosic fibres may be sprayed in suspension to form meso-porous thin separators.
The separator may also act as the electrolyte in a solid state lithium ion battery or supercapacitor. In this case, the separator must be conductive to ions but not to electrons, and must also act as the source of the free ions.
Traditionally, a problem with solid state batteries is that the ion mobility is slow in the solid state so charging and discharging is unviably slow. A compromise is the lithium-ion polymer battery (Li-Po) which uses a gel like polymer as the electrolyte/separator. However, preventing shorting can be a problem if the polymer gets squeezed out from between the electrodes. Also, the gel may be flammable.
Solid state lithium ion batteries are attractive, because they are typically very largely non-flammable. With the methods of the present invention, the solid electrolyte/separator layer may be made sufficiently thin that despite the lower ion mobility, reasonable charge/discharge behaviour may still be achieved.

Accordingly, it will be appreciated that the manufacturing methods of the invention offer the potential to make the whole solid-state device of anode-separator/electrolyte-cathode for both liquid and solid state variants, which could be graded and/or possess thin interfacial layers to manage the various electrolyte-electrode and other reactions often experienced in lithium ion batteries and similar devices. Such layers could comprise thin metallic, e.g. indium, or conducting polymer layers.

In an embodiment, the invention may comprise mixing two or more sprays and controlling their mass flow rates on the fly. The methods of manufacture of the invention may be used to make entire devices, e.g. lithium ion batteries or supercapacitors, or components, e.g. electrodes, separators or fuel cell membranes, thereof.

Advantageously, the invention may provide the ability to make graded electrodes with tailored porosity and other functionality, thereby offering improved energy storage performance.

Structured, graded or reticulated electrodes may be manufactured using methods according to the invention.

For instance, a graded electrode may be considered to mean an electrode in which porosity or particle size or microstructure is controlled throughout the structure of the electrode.

Manufacturing methods according to the invention may provide for smooth or continuous grading throughout the thickness of an electrode. Alternatively, graded electrodes containing discrete layers may be manufactured using these methods.

The manufacturing methods may be operated substantially continuously through the fabrication of an electrode, a separator or an electrochemical energy storage device such as a solid state battery or supercapacitor. As a result, in some embodiments, any discretization between layers may be avoided.

It should be appreciated that the methods of the invention may be suitable for mass, large volume manufacture. Relatively fast coverage of relatively large areas may be achievable. For instance, the deposition rate of electrode and/or separator materials may be within an order of magnitude of the deposition rates typically achieved by slurry casting processes. It may even be possible to achieve similar throughputs as can be achieved by slurry casting. Accordingly, the methods of the invention may provide a viable, more versatile alternative to slurry casting.

## Claims

1. A method of manufacture of an electrode having a non-uniform microstructure or mesostructure comprising predetermined spatial variations in porosity in the thickness direction, the method comprising:
providing a first suspension containing a first electrode material and a second suspension containing a second electrode material, wherein the first electrode material comprises an electrochemically active material and the second electrode material comprises an electrochemically inert one-dimensional material, which provides in use a physical means to increase local porosity by propping open at least partially the local microstructure or mesostructure of the electrode as a scaffold;
delivering the first and second suspension to a spraying means;
operating the spraying means for a period of time to spray the first and second suspension on to a substrate located a distance from the spraying means; and
controlling the mass flow rate of the first electrode material and/or the second electrode material to and/or through the spraying means as a function of time for at least a portion of the period of time,
wherein the one-dimensional material comprises nanowires or microwires of a transition metal oxide.

2. A method according to claim 1, wherein the electrode is a structured, graded or reticulated electrode and/or wherein the electrode has a non-uniform microstructure or mesostructure comprising predetermined spatial variations in porosity in only one dimension and/or wherein the electrode has a non-uniform through-thickness microstructure or mesostructure comprising predetermined spatial variations in porosity.

3. A method according to any one of the preceding claims, wherein the method comprises a preliminary step of designing the electrode having the non-uniform microstructure or mesostructure.

4. A method according to any one of the preceding claims comprising drying the suspensions during and/or after spraying, optionally wherein the drying conditions are selected and/or controlled such that the drying rate substantially matches the rate of deposition of the electrode materials and/or wherein the substrate is heated, in order to control the drying rate.

5. A method according to any one of the preceding claims comprising moving the substrate relative to the spraying means.

6. A method according to any one of the preceding claims comprising providing more than two suspensions containing an electrode material.

7. A method according to any one of the preceding claims comprising the step of mixing two or more of the suspensions together before delivering the suspensions to the spraying means or wherein each suspension is delivered to a separate spraying means.

8. A method according to any one of the preceding claims, wherein the spraying means comprises one or more spray heads or nozzles or atomisers.

9. A method according to any one of the preceding claims, wherein the substrate comprises a metallic sheet or foil.

10. A method according to any one of the preceding claims further comprising preparing one or more of the suspensions.

11. A method according to any one of the preceding claims, wherein the electrode has a thickness of no more than 100 µm and/or the electrode has a thickness of at least 200 nm.

12. A method according to any one of the preceding claims comprising the step of pressure forming or calendering the electrode.

13. A method of manufacture of an electrochemical energy storage device, e.g. a battery or a supercapacitor, comprising:
(i) manufacturing a first electrode in accordance with any one of claims 1 to 12;
(ii) using the first electrode as a substrate, manufacturing a separator on the first electrode by:
providing at least one suspension containing a separator material; and
delivering the suspension(s) to a spraying means; and
operating the spraying means to spray the suspension on to a substrate located a distance from the spraying means; and
(iii) using the separator as a substrate, manufacturing a second electrode in accordance with any one of claims 1 to 12.

## Patentansprüche

1. Verfahren zur Herstellung einer Elektrode, die eine uneinheitliche Mikrostruktur oder Mesostruktur hat, umfassend vorbestimmte räumliche Variationen in der Porosität in der Dickenrichtung, wobei das Verfahren umfasst:
Bereitstellen einer ersten Suspension, die ein erstes Elektrodenmaterial enthält und einer zweiten Suspension, die ein zweites Elektrodenmaterial enthält, wobei das erste Elektrodenmaterial ein elektrochemisch aktives Material und das zweite Elektrodenmaterial ein elektrochemisch inertes eindimensionales Material umfasst, das in Verwendung physikalische Mittel bereitstellt, um lokale Porosität zu erhöhen mittels mindestens teilweisen Stützens der lokalen Mikrostruktur oder Mesostruktur der Elektrode als ein Gerüst;
Liefern der ersten und zweiten Suspension an ein Sprühmittel;
Betreiben des Sprühmittels über eine Zeitdauer, um die erste und zweite Suspension auf ein Substrat zu sprühen, das in einer Entfernung von dem Sprühmittel lokalisiert ist; und
Steuern des Massendurchflusses des ersten Elektrodenmaterials und/oder des zweiten Elektrodenmaterials zu und/oder durch das Sprühmittel als eine Funktion der Zeit über mindestens einen Anteil der Zeitdauer,
wobei das eindimensionale Material Nanodrähte oder Mikrodrähte eines Übergangsmetalloxids umfasst.

2. Verfahren nach Anspruch 1, wobei die Elektrode eine strukturierte, abgestufte oder vernetzte Elektrode ist und/oder wobei die Elektrode eine uneinheitliche Mikrostruktur oder Mesostruktur hat, die vorbestimmte räumliche Variationen in der Porosität in nur einer Dimension umfasst und/oder wobei die Elektrode eine uneinheitliche Durchgangsdickenmikrostruktur oder -mesostruktur hat, die vorbestimmte räumliche Variationen in der Porosität umfasst.

3. Verfahren nach einem der vorstehenden Ansprüche, wobei das Verfahren einen vorläufigen Schritt des Designens der Elektrode umfasst, die eine uneinheitliche Mikrostruktur oder Mesostruktur hat.

4. Verfahren nach einem der vorstehenden Ansprüche, umfassend Trocknen der Suspensionen während und/oder nach dem Sprühen, optional wobei die Trockenbedingungen so ausgewählt und/oder gesteuert sind, dass die Trockenrate im Wesentlichen mit der Rate der Ablagerung von Elektrodenmaterialien übereinstimmt und/oder wobei das Substrat geheizt wird, um die Trockenrate zu kontrollieren.

5. Verfahren nach einem der vorstehenden Ansprüche, umfassend Bewegen des Substrats relativ zu dem Sprühmittel.

6. Verfahren nach einem der vorstehenden Ansprüche, umfassend Bereitstellen von mehr als zwei Suspensionen, die ein Elektrodenmaterial enthalten.

7. Verfahren nach einem der vorstehenden Ansprüche, umfassend den Schritt des Mischens von zwei oder mehr Suspensionen miteinander, vor dem Liefern der Suspensionen an das Sprühmittel oder wobei jede Suspension an ein separates Sprühmittel geliefert wird.

8. Verfahren nach einem der vorstehenden Ansprüche, wobei das Sprühmittel einen oder mehrere Sprühköpfe oder -düsen oder -zerstäuber umfasst.

9. Verfahren nach einem der vorstehenden Ansprüche, wobei das Substrat ein metallisches Blatt oder Folie umfasst.

10. Verfahren nach einem der vorstehenden Ansprüche, weiter umfassend Bereiten einer oder mehrerer der Suspensionen.

11. Verfahren nach einem der vorstehenden Ansprüche, wobei die Elektrode eine Dicke von nicht mehr als 100 µm hat und/oder die Elektrode eine Dicke von mindestens 200 nm hat.

12. Verfahren nach einem der vorstehenden Ansprüche, umfassend den Schritt des Druckformens oder Kalandrierens der Elektrode.

13. Verfahren zur Herstellung einer elektrochemischen Energiespeichervorrichtung, z.B. einer Batterie oder eines Superkondensators, umfassend:
(i) Herstellen einer ersten Elektrode in Übereinstimmung mit einem der Ansprüche 1 bis 12;
(ii) Verwenden der ersten Elektrode als ein Substrat, Herstellen eines Separators auf der ersten Elektrode mittels:
Bereitstellens mindestens einer Suspension, die ein Separatormaterial enthält; und
Liefern der Suspension(en) an ein Sprühmittel; und
Betreiben des Sprühmittels, um die Suspension auf ein Substrat zu sprühen, das in einer Entfernung von dem Sprühmittel lokalisiert ist; und
(iii) Verwenden des Separators als ein Substrat, Herstellen einer zweiten Elektrode in Übereinstimmung mit einem der Ansprüche 1 bis 12.

## Revendications

1. Procédé de fabrication d'une électrode ayant une microstructure ou mésostructure non uniforme comprenant des variations spatiales prédéterminées de porosité dans la direction de l'épaisseur, le procédé comprenant :
la fourniture d'une première suspension contenant un premier matériau d'électrode et d'une seconde suspension contenant un second matériau d'électrode, dans lequel le premier matériau d'électrode comprend un matériau électrochimiquement actif et le second matériau d'électrode comprend un matériau unidimensionnel électrochimiquement inerte, ce qui fournit pendant une utilisation un moyen physique pour accroître la porosité locale en maintenant ouverte au moins partiellement la microstructure ou mésostructure locale de l'électrode en tant qu'échafaudage ;
la distribution de la première et de la seconde suspension à un moyen de pulvérisation ;
l'actionnement du moyen de pulvérisation pendant une période de temps pour pulvériser la première et la seconde suspension sur un substrat situé à distance du moyen de pulvérisation ; et
la régulation du débit massique du premier matériau d'électrode et/ou du second matériau d'électrode vers et/ou à travers le moyen de pulvérisation en fonction du temps pendant au moins une partie de la période de temps,
dans lequel le matériau unidimensionnel comprend des nanofils ou des microfils d'un oxyde de métal de transition.

2. Procédé selon la revendication 1, dans lequel l'électrode est une électrode structurée, classée ou réticulée et/ou dans lequel l'électrode a une microstructure ou mésostructure non uniforme comprenant des variations spatiales prédéterminées de porosité dans une seule dimension et/ou dans lequel l'électrode a une microstructure ou mésostructure d'épaisseur totale non uniforme comprenant des variations spatiales prédéterminées de porosité.

3. Procédé selon l'une quelconque des revendications précédentes, dans lequel le procédé comprend une étape préliminaire consistant à concevoir l'électrode ayant la microstructure ou mésostructure non uniforme.

4. Procédé selon l'une quelconque des revendications précédentes comprenant le séchage des suspensions pendant et/ou après la pulvérisation, facultativement dans lequel les conditions de séchage sont sélectionnées et/ou régulées de sorte que le taux de séchage correspond sensiblement au taux de dépôt des matériaux d'électrode et/ou dans lequel le substrat est chauffé, afin de réguler le taux de séchage.

5. Procédé selon l'une quelconque des revendications précédentes comprenant le déplacement du substrat par rapport au moyen de pulvérisation.

6. Procédé selon l'une quelconque des revendications précédentes comprenant la fourniture de plus de deux suspensions contenant un matériau d'électrode.

7. Procédé selon l'une quelconque des revendications précédentes comprenant l'étape consistant à mélanger deux ou plus des suspensions ensemble avant de distribuer les suspensions au moyen de pulvérisation ou dans lequel chaque suspension est distribuée à un moyen de pulvérisation séparé.

8. Procédé selon l'une quelconque des revendications précédentes, dans lequel le moyen de pulvérisation comprend une ou plusieurs têtes de pulvérisation ou buses ou atomiseurs.

9. Procédé selon l'une quelconque des revendications précédentes, dans lequel le substrat comprend une couche ou feuille métallique.

10. Procédé selon l'une quelconque des revendications précédentes comprenant en outre la préparation d'une ou plusieurs des suspensions.

11. Procédé selon l'une quelconque des revendications précédentes, dans lequel l'électrode a une épaisseur de pas plus de 100 µm et/ou l'électrode a une épaisseur d'au moins 200 nm.

12. Procédé selon l'une quelconque des revendications précédentes comprenant l'étape consistant à former sous pression ou calandrer l'électrode.

13. Procédé de fabrication d'un dispositif de stockage d'énergie électrochimique, par exemple une batterie ou un supercondensateur, comprenant :
(i) la fabrication d'une première électrode conformément à l'une quelconque des revendications 1 à 12 ;
(ii) l'utilisation de la première électrode en tant que substrat, la fabrication d'un séparateur sur la première électrode par :
la fourniture d'au moins une suspension contenant un matériau séparateur ; et
la distribution de la/des suspensions à un moyen de pulvérisation ; et
l'actionnement du moyen de pulvérisation pour pulvériser la suspension sur un substrat situé à distance du moyen de pulvérisation ; et
(iii) l'utilisation du séparateur en tant que substrat, la fabrication d'une seconde électrode conformément à l'une quelconque des revendications 1 à 12.
